# EUROPÄISCHE PATENTSCHRIFT

(11) **EP 3 218 117 B1**
(45) Veröffentlichungstag und Bekanntmachung des Hinweises auf die Patenterteilung: **07.08.2019**
(21) Anmeldenummer: 15790592.8
(22) Anmeldetag: 06.11.2015
(51) Int. Cl.: B05B 15/00

(54) **PULVERBEHÄLTER FÜR EINE PULVERBESCHICHTUNGSANLAGE**
POWDER CONTAINER FOR A POWDER COATING INSTALLATION
CHAMBRE À POUDRE POUR UNE INSTALLATION DE REVÊTEMENT PAR POUDRAGE

(30) Priorität: 14.11.2014 DE 102014223307
(43) Veröffentlichungstag der Anmeldung: 20.09.2017
(73) Patentinhaber: Gema Switzerland GmbH, 9015 St. Gallen (CH)
(72) Erfinder: MAUCHLE, Felix, CH-9030 Abtwil (CH); DOS REIS, Paulo, 9015 St. Gallen (CH)
(74) Vertreter: Trinks, Ole
(86) Internationale Anmeldenummer: PCT/EP2015/075961
(87) Internationale Veröffentlichungsnummer: WO 2016/075049

(56) Entgegenhaltungen:
- EP-A2- 0 940 189
- WO-A2-97/02895

## Beschreibung

Die vorliegende Erfindung betrifft einen Pulverbehälter gemäß dem Oberbegriff des unabhängigen Patentanspruches 1.

Demgemäß betrifft die Erfindung insbesondere einen Pulverbehälter zur Versorgung einer Pulverbeschichtungsanlage mit Beschichtungspulver, wobei der Pulverbehälter eine durch Seitenwände begrenzte Pulverkammer für Beschichtungspulver aufweist, wobei in einer Seitenwand des Pulverbehälters eine Auslassöffnung vorgesehen ist, über welche die Pulverkammer mit einem Einlass eines Pulverabscheidersystems strömungsmäßig verbunden oder verbindbar ist.

Ein derartiger Pulverbehälter ist - zumindest dem Prinzip nach - aus der WO 97/02895 A2 bekannt.

Der erfindungsgemäße Pulverbehälter eignet sich insbesondere für die Pulverversorgung einer zur elektrostatischen Sprühbeschichtung von Gegenständen mit Pulver eingesetzten Pulverbeschichtungsanlage, bei welcher sich frisches Beschichtungspulver (nachfolgend auch "Frischpulver" genannt) und gegebenenfalls zurückgewonnenes Beschichtungspulver (nachfolgend auch "Recoverypulver" genannt) in dem Pulverbehälter befinden und durch eine Pulverabgabeeinrichtung, beispielsweise in Gestalt eines Injektors oder einer Pulverpumpe, einer Sprühvorrichtung, insbesondere einer Sprühpistole zugeführt werden. Die Sprühvorrichtung kann beispielsweise eine Handpistole oder eine automatische Pistole sein.

Dem Pulverbehälter wird je nach Bedarf über eine Frischpulverleitung frisches Pulver aus einem Lieferantenbehälter zugeführt, in welchem der Pulverlieferant das frische Pulver dem Pulveranwender liefert.

Im Lieferantenbehälter bildet das Pulver eine kompakte Masse. Dem gegenüber sollte das Beschichtungspulver im Pulverbehälter in einem fluidisierten Zustand vorliegen, damit es beispielsweise durch die Saugwirkung eines Injektors oder mit Hilfe einer Dichtstrompumpe abgesaugt und in einem Druckluftstrom der Sprühvorrichtung zugeführt werden kann. Der Pulverbehälter dient somit als Pulverkammer zur Aufbewahrung von Beschichtungspulver, wobei üblicherweise das Beschichtungspulver im Pulverbehälter fluidisiert wird, damit es pneumatisch leicht förderbar ist, entweder zu einem anderen Pulverbehälter oder zu einer Pulversprühvorrichtung. Wie bereits angedeutet, kann letzteres eine manuelle oder eine automatische Pulversprühvorrichtung sein, welche beispielsweise eine Sprühdüse oder einen Rotationszerstäuber aufweisen kann.

Der Erfindung liegt die Problemstellung zugrunde, dass Sprühbeschichtungsanlagen und die zugehörigen Pulverbehälter bei einem Pulverwechsel (Wechsel von einer Pulversorte auf eine andere Pulversorte), insbesondere bei einem Farbwechsel (Wechsel von Pulver einer ersten Farbe auf ein Pulver mit einer zweiten Farbe) sorgfältig gereinigt werden müssen, da bereits einige wenige Pulverpartikel der früheren Pulversorte Beschichtungsfehler bei der Beschichtung mit der neuen Pulversorte zur Folge haben können.

Durch die Erfindung soll demnach die Aufgabe gelöst werden, eine Möglichkeit zu schaffen, durch welche ein Pulverwechsel auf einfache Weise schnell möglich ist.

Diese Aufgabe wird gemäß der Erfindung durch die Merkmale des unabhängigen Patentanspruchs 1 gelöst, wobei vorteilhafte Weiterbildungen des erfindungsgemäßen Pulverbehälters in den abhängigen Ansprüchen angegeben sind.

Demgemäß wird insbesondere ein Pulverbehälter zur Versorgung einer Sprühbeschichtungsanlage mit Beschichtungspulver angegeben, wobei der Pulverbehälter eine durch Seitenwände begrenzte Pulverkammer für Beschichtungspulver aufweist. In einer Seitenwand des Pulverbehälters ist mindestens eine Auslassöffnung vorgesehen, über welche die Pulverkammer mit einem Einlass eines Pulverabscheidersystems strömungsmäßig verbunden oder verbindbar ist. Erfindungsgemäß ist insbesondere vorgesehen, dass der effektive Strömungsquerschnitt der strömungsmäßigen Verbindung zwischen der Auslassöffnung des Pulverbehälters und dem Einlass des Pulverabscheidersystems variabel einstellbar ist.

Die mit der erfindungsgemäßen Lösung erzielbaren Vorteile liegen auf der Hand: indem die Pulverkamm er des Pulverbehälters über die mindestens eine in einer Seitenwand des Pulverbehälters vorgesehenen Auslassöffnung mit dem Einlass des Pulverabscheidersystems strömungsmäßig verbunden oder verbindbar ist, wobei des Weiteren der effektive Strömungsquerschnitt der strömungsmäßigen Verbindung zwischen der Auslassöffnung des Pulverbehälters und dem Einlass des Pulverabscheidersystems variabel eingestellt werden kann, ist es möglich, in einer einfach zu realisierenden aber dennoch effektiven Weise den Pulverbehälter an das Pulverabscheidersystem anzupassen bzw. diese beiden Komponenten aufeinander abzustimmen. Somit kann sowohl im Pulverbeschichtungsbetrieb, also dann, wenn die Sprühbeschichtungsanlage mit Beschichtungspulver aus dem Pulverbehälter versorgt wird, als auch im Reinigungsbetrieb, also dann, wenn der Pulverbehälter und möglicherweise auch die anderen Komponenten der Sprühbeschichtungsanlage gereinigt werden, die in die Pulverkammer des Pulverbehälters eingeleitete Druckluft stets über die mindestens eine in der Seitenwand des Pulverbehälters vorgesehene Auslassöffnung du der strömungsmäßigen Verbindung mit dem variabel einstellbaren effektiven Strömungsquerschnitt dem Pulverabscheidersystem zugeführt werden.

Da abhängig von dem Betriebsmodul (Pulverbeschichtungsbetrieb oder Reinigungsbetrieb) pro Zeiteinheit unterschiedliche Mengen an Druckluft (Fluidisierdruckluft bzw. Reinigungsdruckluft) in die Pulverkammer des Pulverbehälters eingebracht werden, ist es erforderlich, dass der effektive Strömungsquerschnitt der strömungsmäßigen Verbindung zwischen der einen Auslassöffnung in der Seitenwand des Pulverbehälters zu dem Einlass des Pulverabscheidersystems entsprechend variiert werden kann, damit die Druckverhältnisse in der Pulverkammer und am Einlass des Pulverabscheidersystems innerhalb der zulässigen Bereiche liegen. Diese Anpassung ist mit der erfindungsgemäßen Lösung und insbesondere dadurch, dass der effektive Strömungsquerschnitt der strömungsmäßigen Verbindung variabel einstellbar ist, in einer leicht zu realisierenden Weise möglich.

Somit kann insbesondere durch das variable Einstellen des effektiven Strömungsquerschnittes der strömungsmäßigen Verbindung zwischen der Pulverkammer und dem Einlass des Pulverabscheidersystems erreicht werden, dass beim Wechsel von einem Pulverbeschichtungsbetrieb auf einen Reinigungsbetrieb nach wie vor die strömungsmäßige Verbindung zwischen der Pulverkammer und dem Einlass des Pulverabscheidersystems herangezogen werden kann, um die Reinigungsdruckluft dann im Reinigungsbetrieb dem Abscheidersystem zuzuführen. Über die gleiche Auslassöffnung kann andererseits im Pulverbeschichtungsbetrieb die zur Fluidisierung des Beschichtungspulvers in die Kammer eingebrachte Fluidisierdruckluft dem Einlass des Pulverabscheidersystems zugeführt werden.

In einer möglichen Realisierung der erfindungsgemäßen Lösung ist eine Steuereinrichtung vorgesehen, welche ausgebildet ist, in Abhängigkeit eines Betriebsmodus der Sprühbeschichtungsanlage oder des Pulverbehälters den effektiven Strömungsquerschnitt der strömungsmäßigen Verbindung zwischen der mindestens einen Auslassöffnung des Pulverbehälters und dem Einlass des Pulverabscheidersystems einzustellen. Insbesondere ist hierbei vorgesehen, dass der effektive Strömungsquerschnitt der strömungsmäßigen Verbindung zwischen der Auslassöffnung des Pulverbehälters und dem Einlass des Pulverabscheidersystems vergrößert wird, wenn der Betriebsmodus der Sprühbeschichtungsanlage bzw. der Betriebsmodus des Pulverbehälters von einem Pulverbeschichtungsbetrieb zu einem Reinigungsbetrieb wechselt.

Andererseits wäre es in diesem Zusammenhang von Vorteil, wenn die Steuereinrichtung ausgebildet ist, den effektiven Strömungsquerschnitt der strömungsmäßigen Verbindung zwischen der Auslassöffnung des Pulverbehälters und dem Einlass des Pulverabscheidersystems entsprechend zu reduzieren, wenn der Betriebsmodus der Sprühbeschichtungsanlage oder des Pulverbehälters von einem Reinigungsbetrieb zu einem Pulverbeschichtungsbetrieb wechselt.

Alternativ oder zusätzlich zu den zuvor genannten Ausführungsformen ist es denkbar, eine Steuereinrichtung vorzusehen, welche ausgebildet ist, in Abhängigkeit von einer pro Zeiteinheit dem Pulverbehälter zugeführten Menge an Druckluft, insbesondere Fluidisierdruckluft und/oder Reinigungsdruckluft, den effektiven Strömungsquerschnitt der strömungsmäßigen Verbindung zwischen der Auslassöffnung in der Seitenwand des Pulverbehälters und dem Einlass des Pulverabscheidersystems einzustellen. In diesem Zusammenhang ist es insbesondere von Vorteil, wenn der effektive Strömungsquerschnitt vergrößert wird, wenn die pro Zeiteinheit dem Pulverbehälter zugeführte Menge an Druckluft einen vorab festgelegten Wert überschreitet, und dass der effektive Strömungsquerschnitt entsprechend reduziert wird, wenn die pro Zeiteinheit dem Pulverbehälter zugeführte Menge an Druckluft einen vorab festgelegten Wert unterschreitet.

In einer weiteren Ausführungsform der erfindungsgemäßen Lösung ist ein Drucksensorsystem vorgesehen, um einen sich im Pulverbehälter einstellenden Druck zu erfassen. Denkbar in diesem Zusammenhang wäre es dabei, dass in Abhängigkeit des erfassten Druckes der effektive Strömungsquerschnitt der strömungsmäßigen Verbindung zwischen der Auslassöffnung in der Seitenwand des Pulverbehälters und dem Einlass des Pulverabscheidersystems derart eingestellt wird, dass der erfasste Druckwert einen vorab festgelegten Druckwert nicht überschreitet. Auf diese Weise ist stets sichergestellt, dass sich kein übermäßiger Überdruck im Pulverbehälter aufbauen kann. Vielmehr wird in solche einem Fall die pro Zeiteinheit dem Einlass des Pulverabscheidersystems zugeführte Menge an Luft entsprechend erhöht.

Alternativ oder zusätzlich ist es in diesem Zusammenhang denkbar, dass eine Differenz zwischen dem Druck im Pulverbehälter und einem Druck am Einlass des Pulverabscheidersystems ermittelt wird, wobei in Abhängigkeit der ermittelten Druckdifferenz der effektive Strömungsquerschnitt der strömungsmäßigen Verbindung zwischen der Auslassöffnung in der Seitenwand des Pulverbehälters und dem Einlass des Pulverbehälters derart eingestellt wird, dass die ermittelte Druckdifferenz einen vorab festgelegten Betrag nicht über- oder unterschreitet.

Im Folgenden wird unter Bezugnahme auf die beiliegenden Zeichnungen eine exemplarische Ausführungsform der erfindungsgemäßen Lösung beschrieben.

In den Zeichnungen zeigen:
- FIG. 1:: schematisch eine Pulverbeschichtungsanlage mit einem zur Pulverversorgung verwendeten Pulverbehälter nach der Erfindung; und
- FIG. 2:: schematisch eine weitere Pulverbeschichtungsanlage mit einem Pulverbehälter gemäß der Erfindung.

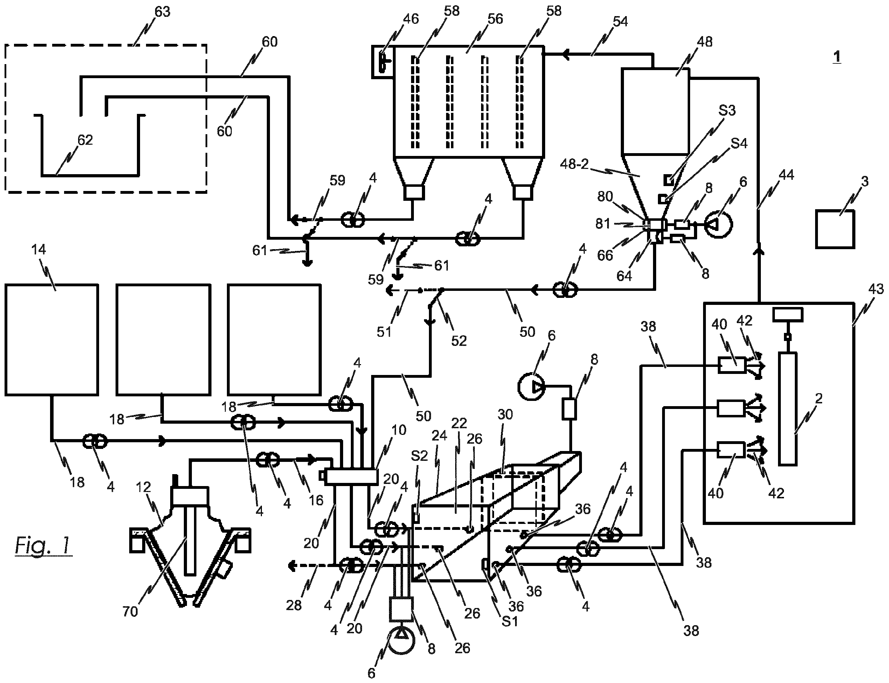

FIG. 1 zeigt schematisch eine exemplarische Ausführungsform einer Pulverbeschichtungsanlage 1 nach der erfindungsgemäßen Lösung. Die Pulverbeschichtungsanlage 1 dient zum Sprühbeschichten von Gegenständen 2 mit Beschichtungspulver, welches danach in einem in FIG. 1 nicht dargestellten Wärmeofen auf die Gegenstände 2 aufgeschmolzen wird. Für die Steuerung der Funktion der Pulverbeschichtungsanlage 1 sind ein oder mehrere elektronische Steuergeräte 3 vorgesehen.

Zur pneumatischen Förderung des Beschichtungspulvers sind Pulverpumpen 4 vorgesehen. Dies können Injektoren sein, in welchen Beschichtungspulvermittel als Förderluft dienende Druckluft aus einem Pulverbehälter angesaugt wird, wonach dann das Gemisch aus Förderluft und Beschichtungspulver gemeinsam in einen Behälter oder zu einer Sprühvorrichtung strömt.

Geeignete Injektoren sind beispielsweise aus der Druckschrift EP 0 412 289 B1 bekannt.

Als Pulverpumpe 4 können auch solche Pumpenarten verwendet werden, welche kleine Pulverportionen mittels Druckluft nacheinander fördern, wobei jeweils eine kleine Pulverportion (Pulvermenge) in einer Pulverkammer gespeichert und dann mittels Druckluft aus der Pulverkammer herausgedrückt wird. Die Druckluft bleibt hinter der Pulverportion und schiebt die Pulverportion vor sich her. Diese Pumpenarten werden manchmal als "Druckluftschubpumpen" oder "Propfenförderungs-Pumpen" bezeichnet, da die Druckluft die gespeicherte Pulverportion wie einen Pfropfen vor sich her durch eine Pumpenauslassleitung schiebt. Verschiedene Arten solcher Pulverpumpen zum Fördern von dichtem Beschichtungspulver sind beispielsweise aus folgenden Druckschriften bekannt: DE 103 53 968 A1, US 6,508,610 B2, US 2006/0193704 A1, DE 101 45 448 A1 oder WO 2005/051549 A1.

Die Erfindung ist nicht auf eine der genannten Arten von Pulverpumpen beschränkt.

Zur Erzeugung der Druckluft für die pneumatische Förderung des Beschichtungspulvers und zur Fluidisierung des Beschichtungspulvers ist eine Druckluftquelle 6 vorgesehen, welche über entsprechende Druckeinstellelemente 8, z B. Druckregler und/oder Ventile, an die verschiedenen Geräte angeschlossen ist.

Frischpulver von einem Pulverlieferanten wird aus einem Lieferantenbehältnis, was beispielsweise ein Kleinbehältnis 12 z.B. in Form eines formstabilen Behälters oder eines Sackes mit einer Pulvermenge von beispielsweise zwischen 10 bis 50 kg, oder z. B. ein Großbehältnis 14 beispielsweise mit einer Pulvermenge zwischen 100 kg und 1.000 kg sein kann, mittels einer Pulverpumpe 4 in einer Frischpulverleitung 16 oder 18 einer Siebvorrichtung 10 zugeführt. Die Siebvorrichtung 10 kann mit einem Vibrator 11 versehen sein. Das von der Siebvorrichtung 10 gesiebte Beschichtungspulver wird durch Schwerkraft oder vorzugsweise jeweils durch eine Pulverpumpe 4 über eine oder mehrere Pulverzufuhrleitungen 20, 20' durch mindestens eine Pulvereinlassöffnung 26 in eine Pulverkammer 22 eines formstabilen Pulverbehälters 24 gefördert. Das Volumen der Pulverkammer 22 ist vorzugsweise kleiner als das Volumen des Frischpulver-Kleinbehälters 12.

Gemäß einer denkbaren Realisierung der erfindungsgemäßen Lösung ist die Pulverpumpe 4 der mindestens einen Pulverzufuhrleitung 20, 20' zu dem Pulverbehälter 24 eine Druckluftschubpumpe. Hierbei kann der Anfangsabschnitt der Pulverzufuhrleitung 20 als Pumpenkammer dienen, in welche von der Siebvorrichtung 10 gesiebtes Pulver durch ein Ventil, z.B. ein Quetschventil, fällt. Nachdem diese Pumpenkammer eine bestimmte Pulverportion enthält, wird die Pulverzufuhrleitung 20 durch Schließen des Ventils von der Siebvorrichtung 10 strömungsmäßig getrennt. Danach wird die Pulverportion mittels Druckluft durch die Pulverzufuhrleitung 20, 20' in die Pulverkammer 22 gestoßen.

An ein oder vorzugsweise mehrere Pulverauslassöffnung 36 des Pulverbehälters 24 sind Pulverpumpen 4, z.B. Injektoren oder Druckluftschubpumpen, zur Förderung von Beschichtungspulver durch Pulverleitungen 38 zu Sprühvorrichtungen 40 angeschlossen. Die Sprühvorrichtungen 40 können Sprühdüsen oder Rotationszerstäuber zum Sprühen des Beschichtungspulvers 42 auf den zu beschichtenden Gegenstand 2 aufweisen, welcher sich vorzugsweise in einer Beschichtungskabine 43 befindet.

Die Pulverauslassöffnungen 36 können sich - wie in FIG. 1 dargestellt - in einer Wand des Pulverbehälters 24 befinden, welche der Wand gegenüberliegt, in welcher sich die mindestens eine Pulvereinlassöffnung 26 befindet. Alternativ können die Pulverauslassöffnungen 36 jedoch auch in einer Wand angeordnet sein, welche angrenzend zu der Wand ist, in welcher sich die mindestens eine Pulvereinlassöffnung 26 befindet. Die Pulverauslassöffnungen 36 sind vorzugsweise nahe dem Boden der Pulverkammer 22 angeordnet.

Die Pulverkammer 22 hat vorzugsweise eine Größe, die im Bereich eines Fassungsvermögens an Beschichtungspulvers zwischen 60 bis 100 Litern. Die Größe der Pulverkammer 22 wird in Abhängigkeit von der Anzahl der Pulverauslassöffnungen 36 und der daran angeschlossenen Pulverleitungen 38 derart gewählt, dass ein kontinuierlicher Sprühbeschichtungsbetrieb möglich ist, jedoch die Pulverkammer 22 in Beschichtungspausen für einen Pulverwechsel gereinigt werden kann, vorzugsweise automatisch.

Die Pulverkammer 22 kann mit einer Fluidisiereinrichtung 30 zum Fluidisieren des im Pulverbehälter 24 aufgenommenen Beschichtungspulvers versehen sein. Die Fluidisiereinrichtung 30 enthält mindestens eine Fluidisierwand aus einem offenporigen oder mit engen Bohrungen versehenen Material, welches für Druckluft, jedoch nicht für Beschichtungspulver durchlässig ist. Obwohl in FIG. 1 nicht gezeigt, ist es von Vorteil, wenn bei dem Pulverbehälter 24 die Fluidisierwand den Boden des Pulverbehälters 24 ausbildet und zwischen der Pulverkammer 22 und einer Fluidisier-Druckluftkammer angeordnet ist. Die Fluidisier-Druckluftkammer sollte über ein Druckeinstellelement 8 mit der Druckluftquelle 6 verbindbar sein.

Beschichtungspulver 42, welches nicht an dem zu beschichtenden Gegenstand 2 haftet, wird als Überschusspulver über eine Überschusspulverleitung 44 mittels eines Saugluftstromes eines Gebläses 46 in einen Zyklonabscheider 48 gesaugt. Das Überschusspulver wird im Zyklonabscheider 48 so weit wie möglich vom Saugluftstrom getrennt. Der getrennte Pulveranteil wird dann als Rückgewinnungspulver bzw. Recoverypulver vom Zyklonabscheider 48 über eine Pulverrückgewinnungsleitung 50 zu der bereits genannten Siebvorrichtung 10 geleitet, wo es durch die Siebvorrichtung 10 hindurch, entweder allein oder vermischt mit Frischpulver über die Pulverzufuhrleitungen 20, 20' wieder in die Pulverkammer 22 gelangt.

Je nach Pulversorte und/oder Pulververschmutzungsgrad kann auf die Möglichkeit vorgesehen werden, die Pulverrückgewinnungsleitung 50 von der Siebvorrichtung 10 zu trennen und das Rückgewinnungspulver (Recoverypulver) in einen Abfallbehälter zu leiten, wie dies in FIG. 1 durch eine gestrichelte Linie 51 schematisch dargestellt ist. Die Pulverrückgewinnungsleitung 50 kann, damit sie nicht von der Siebvorrichtung 10 getrennt zu werden braucht, mit einer Weiche 52 versehen werden, an welche sie alternativ mit der Siebvorrichtung 10 oder mit einem Abfallbehälter verbindbar ist.

Der Pulverbehälter 24 kann einen oder mehrere, beispielsweise zwei Sensoren S1 und/oder S2 aufweisen, um die Zufuhr von Beschichtungspulver in die Pulverkammer 22 mittels des Steuergerätes 3 und der Pulverpumpen 4 in den Pulverzuleitungen 20, 20' zu steuern. Beispielsweise detektiert der untere Sensor S1 ein unteres Pulverniveaulimit und der obere Sensor S2 ein oberes Pulverniveaulimit.

Der untere Endabschnitt 48-2 des Zyklonabscheiders 48 kann als Vorratsbehälter für Rückgewinnungspulver ausgebildet und verwendet werden und hierfür mit einem oder mehreren, beispielsweise zwei Sensoren S3 und/oder S4 versehen werden, welche funktionsmäßig mit dem Steuergerät 3 verbunden sind. Dadurch kann beispielsweise automatisch die Frischpulverzufuhr durch die Frischpulverleitungen 16, 18 gestoppt werden, solange im Zyklonabscheider 48 ausreichend Rückgewinnungspulver vorhanden ist, um der Pulverkammer 22 durch die Siebvorrichtung 10 hindurch Rückgewinnungspulver in ausreichender Menge zuzuführen, welche für den Sprühbeschichtungsbetrieb mittels der Sprühvorrichtung 40 erforderlich ist. Wenn im Zyklonabscheider 48 hierfür nicht mehr ausreichend Rückgewinnungspulver vorhanden ist, kann automatisch auf die Zufuhr von Frischpulver durch die Frischpulverleitungen 16, 18 umgeschaltet werden. Ferner besteht auch die Möglichkeit, Frischpulver und Rückgewinnungspulver gleichzeitig der Siebvorrichtung 10 zuzuführen, so dass sie miteinander vermischt werden.

Die Abluft des Zyklonabscheiders 48 gelangt über eine Abluftleitung 54 in eine Nachfiltervorrichtung 56 und darin durch ein oder mehrere Filterelemente 58 zu dem Gebläse 46 und nach diesem in die Außenatmosphäre. Die Filterelemente 58 können Filtersäcke oder Filterpatronen oder Filterplatten oder ähnliche Filterelemente sein. Das mittels der Filterelemente 58 vom Luftstrom getrennte Pulver ist normalerweise Abfallpulver und fällt durch Schwerkraft in einen Abfallbehälter oder kann, wie in FIG. 1 gezeigt, über eine oder mehrere Abfallleitungen 60, welche jeweils eine Pulverpumpe 4 enthalten, in einen Abfallbehälter 62 an einer Abfallstation 63 gefördert werden.

Je nach Pulverart und Pulverbeschichtungsbedingungen kann das Abfallpulver auch wieder zurückgewonnen werden zur Siebvorrichtung 10, um erneut in den Beschichtungskreislauf zu gelangen. Die ist in FIG. 1 durch Weichen 59 und Zweigleitungen 61 der Abfallleitungen 60 schematisch dargestellt.

Beim Mehrfarbenbetrieb, bei welchem verschiedene Farben jeweils nur kurze Zeit versprüht werden, werden üblicherweise der Zyklonabscheider 48 und die Nachfiltervorrichtung 56 verwendet und das Abfallpulver der Nachfiltervorrichtung 56 gelangt in den Abfallbehälter 62. Der Pulverabscheide-Wirkungsgrad des Zyklonabscheiders 48 ist zwar geringer als der der Nachfiltervorrichtung 56, jedoch kann er schneller gereinigt werden als die Nachfiltervorrichtung 56.

Beim Einfarbenbetrieb, bei welchem für lange Zeit das gleiche Pulver verwendet wird, ist es möglich, auf den Zyklonabscheider 48 zu verzichten und die Überschusspulverleitung 44 anstelle der Abluftleitung 54 an die Nachfiltervorrichtung 56 anzuschließen und die Abfallleitungen 60, welche in diesem Fall zurückzugewinnendes Pulver enthalten, als Rückgewinnungspulverleitungen an die Siebvorrichtung 10 anzuschließen.

Beim Einfarbenbetrieb wird üblicherweise nur dann der Zyklonabscheider 48 in Kombination mit der Nachfiltervorrichtung 56 verwendet, wenn es sich um ein problematisches Beschichtungspulver handelt. In diesem Fall wird nur das Rückgewinnungspulver des Zyklonabscheiders 48 über die Pulverrückgewinnungsleitung 50 der Siebvorrichtung 10 zurückgeführt, während das Abfallpulver der Nachfiltervorrichtung 56 als Abfall in den Abfallbehälter 62 oder in einen anderen Abfallbehälter gelangt, welch letzterer ohne Abfallleitungen 60 direkt unter einer Auslassöffnung der Nachfiltervorrichtung 56 gestellt werden kann.

Das untere Ende des Zyklonabscheiders 48 kann ein Auslassventil 64 im oder am unteren Ende des als Vorratsbehälter ausgebildeten unteren Endabschnitt 48-2 des Zyklonabscheiders 48 eine Fluidisiereinrichtung 66 zum Fluidisieren des Beschichtungspulvers vorgesehen sein. Die Fluidisiereinrichtung 66 enthält mindestens eine Fluidisierwand 80 aus einem offenporigen oder mit engen Bohrungen versehenen Material, welches für Druckluft, jedoch nicht für Beschichtungspulver durchlässig ist. Die Fluidisierwand 80 ist zwischen dem Pulverweg und einer Fluidisier-Druckluftkammer 81 angeordnet. Die Fluidisier-Druckluftkammer 81 ist über ein Druckeinstellelement 8 mit der Druckluftquelle 6 verbindbar.

Die Frischpulverleitung 16 und/oder 18 kann an ihrem stromaufwärtigen Ende entweder direkt oder durch die Pulverpumpe 4, mit einem Pulverförderrohr 70 strömungsmäßig verbunden sein, welches in den Lieferantenbehälter 12 oder 14 eintauchbar ist zum Absaugen von frischem Beschichtungspulver. Die Pulverpumpe 4 kann am Anfang, am Ende oder dazwischen in der Pulverleitung 16 bzw. 18 oder am oberen oder unteren Ende des Pulverförderrohres 70 angeordnet sein.

Die mindestens eine Pulvereinlassöffnung 26 ist vorzugsweise in einer Seitenwand des Pulverbehälters 24, insbesondere nahe des Bodens der Pulverkammer 22 angeordnet. Anstelle einer Pulvereinlassöffnung 26 ist es aber auch denkbar, dass die Pulverkammer 22 des Pulverbehälters 26 von oben über eine mit einem Deckel verschließbare Öffnung mit Frischpulver und/oder Recoverypulver befüllt werden kann.

Wie bereits angedeutet ist der Pulverbehälter 25 vorzugsweise mit einer Fluidisiereinrichtung 30 ausgerüstet, um zumindest im Pulverbeschichtungsbetrieb der Pulverbeschichtungsanlage 1 in die Pulverkammer 22 Fluidisierdruckluft einzuleiten. Ferner weist der Pulverbehälter 24 mindestens einen Fluidisierdruckluftauslass 31 mit einer Auslassöffnung 32 auf, über welche die in die Pulverkammer 22 eingeleitete Fluidisierdruckluft zum Zweck eines zumindest teilweisen Druckausgleiches wieder abgeführt werden kann.

Der Pulverbehälter 24 gemäß der vorliegenden Erfindung weist vorzugsweise einen im Wesentlichen quaderförmige Pulverkammer 22 auf zur Aufnahme von Beschichtungspulver. Obwohl in den Zeichnungen nicht dargestellt, kann in einer Seitenwand des Pulverbehälters 24 mindestens ein Reinigungsdrucklufteinlass vorgesehen sein, an welchem in einem Reinigungsbetrieb der Pulverbeschichtungsanlage 1 bzw. des Pulverbehälters 24 zum Entfernen von Restpulver aus der Pulverkammer 22 über eine Druckluftleitung eine Druckluftquelle 6 anschließbar ist, um Reinigungsdruckluft in die Pulverkammer 22 einzuleiten.

Ferner ist in mindestens einer der Seitenwände des Pulverbehälters 24 ein Restpulverauslass 34 vorgesehen, welcher eine Auslassöffnung aufweist, über die mit Hilfe der in die Pulverkammer 22 eingeleiteten Reinigungsdruckluft im Reinigungsbetrieb der Pulverbeschichtungsanlage 1 bzw. des Pulverbehälters 24 Restpulver aus der Pulverkammer 22 heraustreibbar ist.

Die erfindungsgemäße Lösung zeichnet sich insbesondere dadurch aus, dass die Auslassöffnung des Restpulverauslasses 34 identisch mit der Auslassöffnung 32 des Fluidisierdruckluftauslasses 31 sein kann. Wie bereits angedeutet, dient der Fluidisierdruckluftauslass 31 zum Abführen der im Pulverbeschichtungsbetrieb in die Pulverkammer 22 eingeleiteten Fluidisierdruckluft und zum Bewirken eines Druckausgleiches, damit bei Betrieb der Fluidisiereinrichtung 30 der Druck innerhalb der Pulverkammer 22 nicht einen vorab festgelegten Maximaldruck überschreitet.

In diesem Zusammenhang ist es von Vorteil, wenn der Fluidisierdruckluftauslass 31 eine Entlüftungsleitung aufweist, welche außerhalb der Pulverkammer 22 mit einem Steigrohr verbunden oder verbindbar ist, um einen Pulveraustrag aus der Pulverkammer 22 im Pulverbeschichtungsbetrieb der Pulverbeschichtungsanlage 1 zu minimieren bzw. zu verhindern.

Zum Abführen der in die Pulverkammer 22 eingeführten Fluidisierdruckluft ist es ferner denkbar, eine Entlüftungsleitung vorzusehen, die vorzugsweise den oberen Bereich der Pulverkammer 22 hineinragt.

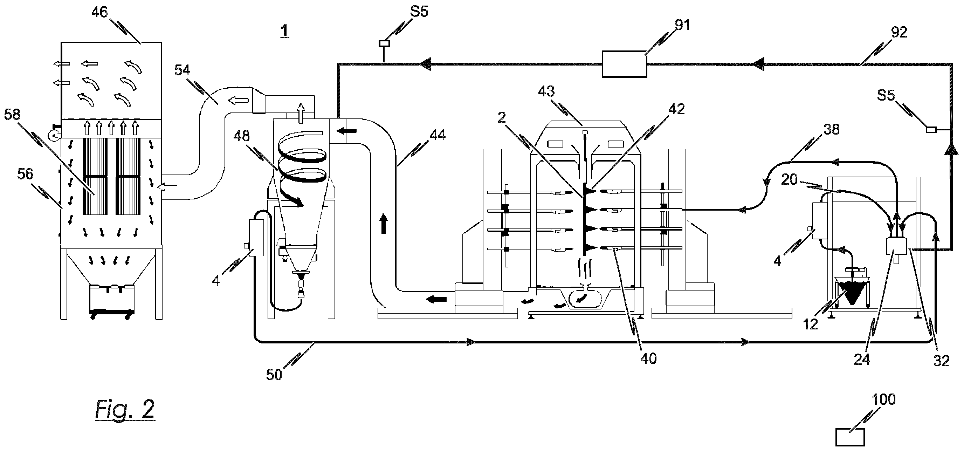

Wie es insbesondere der Darstellung in FIG. 2 entnommen werden kann, ist bei der erfindungsgemäßen Lösung vorgesehen, dass die Auslassöffnung 32 strömungsmäßig mit dem Einlass eines Pulverabscheidersystems (hier: Zyklonabscheider 48 mit nachgeschalteter Nachfiltervorrichtung 56) verbunden ist. Damit die Auslassöffnung 32 sowohl zum Abführen der zuvor eingebrachten Fluidisierdruckluft (zusammen mit ggf. mitgefördertem Beschichtungspulver), als auch zum Abführen von Restpulver im Pulverbeschichtungsbetrieb verwendet werden kann, ist gemäß der vorliegenden Erfindung in der strömungsmäßigen Verbindung 92 zwischen der Auslassöffnung 32 in der Seitenwand des Pulverbehälters 24 und dem Einlass des Pulverabscheidersystems eine Einrichtung 91 zum Einstellen des effektiven Strömungsquerschnittes vorgesehen.

Über diese Einrichtung 91 kann in der schematisch dargestellten Ausführungsform der effektive Strömungsquerschnitt der strömungsmäßigen Verbindung 92 zwischen der Auslassöffnung 32 des Pulverbehälters 24 und dem Einlass des Pulverabscheidersystems variabel eingestellt werden, um die von dem Pulverabscheidersystem bzw. dem Gebläse 46 erzeugten Unterdruckverhältnisse am Einlass des Pulverabscheidersystems und den maximal zulässigen Überdruck in der Pulverkammer 22 an die jeweiligen Betriebsbedingungen anzupassen.

Im Einzelnen, und wie in FIG. 2 schematisch angedeutet, ist in einer bevorzugten Realisierung der erfindungsgemäßen Lösung eine Steuereinrichtung 100 vorgesehen, welche ausgebildet ist, in Abhängigkeit eines Betriebsmodus der Sprühbeschichtungsanlage 1 oder des Pulverbehälters 24 und vorzugsweise automatisch den effektiven Strömungsquerschnitt der strömungsmäßigen Verbindung 92 zwischen der Auslassöffnung 32 des Pulverbehälters 24 und dem Einlass des Pulverabscheidersystems einzustellen. Als Betriebsmodus werden hierin insbesondere ein Reinigungsbetrieb und ein Pulverbeschichtungsbetrieb verstanden.

Während im Pulverbeschichtungsbetrieb über die Auslassöffnung 32 die zuvor über die Fluidisiereinrichtung 30 in die Pulverkammer 22 eingebrachte Fluidisierdruckluft abzuführen ist, was in einer Größenordnung von 0,2 bis 10 Normkubikmeter pro Stunde liegt, ist im Reinigungsbetrieb über die Auslassöffnung 32 eine wesentlich höhere Menge an Druckluft (Reinigungsdruckluft) abzuführen. Wie bereits angedeutet, kann die Reinigungsdruckluft über einen Reinigungsdrucklufteinlass 33 in die Pulverkammer 22 eingeführt werden. Die im Reinigungsbetrieb pro Stunde abzuführende Menge an Reinigungsdruckluft liegt im Größenbereich von 200 bis 2.000 Normkubikmeter.

In einer bevorzugten Weiterbildung der zuvor genannten Ausführungsform ist die Steuereinrichtung 100 insbesondere ausgebildet, mit Hilfe der Einrichtung 91 den effektiven Strömungsquerschnitt der strömungsmäßigen Verbindung 92 zwischen der Auslassöffnung 32 und dem Einlass des Pulverabscheidersystems zu vergrößern, wenn der Betriebsmodus der Sprühbeschichtungsanlage 1 oder des Pulverbehälters 24 von einem Pulverbeschichtungsbetrieb zu einem Reinigungsbetrieb wechselt, und umgekehrt.

Alternativ zu diesen zuvor genannten Ausführungsformen ist es ferner denkbar, die Steuereinrichtung 100 derart auszubilden, dass in Abhängigkeit von einer pro Zeiteinheit dem Pulverbehälter 24 zugeführten Menge an Druckluft, insbesondere Fluidisierdruckluft (im Pulverbeschichtungsbetrieb) und Reinigungsdruckluft (im Reinigungsbetrieb), den effektiven Strömungsquerschnitt der strömungsmäßigen Verbindung 92 einzustellen. In diesem Zusammenhang wäre es denkbar, wenn der effektive Strömungsquerschnitt der strömungsmäßigen Verbindung 92 vorzugsweise automatisch vergrößert wird, wenn die pro Zeiteinheit dem Pulverbehälter 24 zugeführte Menge an Druckluft einen vorab festgelegten Wert überschreitet.

Wie in FIG. 2 schematisch angedeutet, ist es denkbar, ein Drucksensorsystem S5 vorzusehen, um einen sich im Pulverbehälter 24 einstellenden (Luft-) Druck erfassen zu können. In diesem Zusammenhang bietet es sich an, die Steuereinrichtung 100 so auszubilden, dass in Abhängigkeit des erfassten Druckes der effektive Strömungsquerschnitt der strömungsmäßigen Verbindung 92 vorzugsweise automatisch derart eingestellt wird, dass der erfasste Druckwert einen vorab festgelegten Druckwert nicht überschreitet.

Andererseits ist es denkbar, mit Hilfe des Drucksensorsystems S5 eine Differenz zwischen dem Druck im Pulverbehälter 24 und einem Druck am Einlass des Pulverabscheidersystems zu ermitteln, wobei die Steuereinrichtung 100 dann in Abhängigkeit der ermittelten Druckdifferenz den effektiven Strömungsquerschnitt der strömungsmäßigen Verbindung 92 vorzugsweise automatisch derart einstellt, dass die ermittelte Druckdifferenz einen vorab festgelegten Betrag nicht über- oder unterschreitet.

Die Einrichtung 91 zum Einstellen des effektiven Strömungsquerschnittes der strömungsmäßigen Verbindung 92 weist vorzugsweise einen Ventilschieber, ein Drosselventil oder ein variabel einstellbares Quetschventil auf.

Die Erfindung ist nicht auf die in den Zeichnungen dargestellten Ausführungsbeispiele beschränkt, sondern ergibt sich aus einer Zusammenschau sämtlicher hierin offenbarter Merkmale.

Insbesondere ist es in diesem Zusammenhang denkbar, dass zusätzlich eine ansteuerbare Weiche vorgesehen ist, um bedarfsweise die Auslassöffnung 32 des Pulverbehälters 24 direkt in der Außenatmosphäre zu verbinden. Dies ist beispielsweise dann erforderlich bzw. sinnvoll, wenn sicherzustellen ist, dass über die Auslassöffnung 32 des Pulverbehälters 24 nur Druckluft und kein Beschichtungspulver ausgetragen wird.

In diesem Zusammenhang ist es beispielsweise denkbar, wenn die genannte Weiche ein Y-Stück aufweist, welches einerseits über die in der Seitenwand des Pulverbehälters 24 vorgesehene Auslassöffnung 32 mit der Pulverkammer 22 strömungsmäßig verbunden oder verbindbar ist, und welches andererseits mit der Außenatmosphäre oder dem Einlass des Pulverabscheidersystems verbunden ist.

Darüber hinaus kann es von Vorteil sein, wenn vorzugsweise in der Bodenwand des Pulverbehälters 24 mindestens ein Pulverauslass vorgesehen ist, welcher vorzugsweise mit Hilfe eines Quetschventils geöffnet werden kann, um bedarfsweise Beschichtungspulver vorzugsweise durch Schwerkraft aus der Pulverkammer zu entfernen.

Die Erfindung ist insbesondere nicht nur auf einen Pulverbehälter für eine Sprühbeschichtungsanlage, sondern auch auf eine Sprühbeschichtungsanlage zum Sprühbeschichten von Gegenständen mit Beschichtungspulvern gerichtet, wobei die Sprühbeschichtungsanlage mindestens einen Pulverbehälter der zuvor beschriebenen Art, mindestens einen Sprühbeschichtungsplatz oder eine Sprühbeschichtungskabine zum Sprühbeschichten von Gegenständen und mindestens ein Pulverabscheidersystem aufweist.

## Patentansprüche

1. Pulverbehälter (24) zur Versorgung einer Pulverbeschichtungsanlage (1) mit Beschichtungspulver, wobei der Pulverbehälter (24) eine durch Seitenwände begrenzte Pulverkammer (22) für Beschichtungspulver (42) aufweist, wobei in einer Seitenwand des Pulverbehälters (24) eine Auslassöffnung (32) vorgesehen ist, über welche die Pulverkammer (22) mit einem Einlass eines Pulverabscheidersystems (46, 48, 56) strömungsmäßig verbunden oder verbindbar ist,
**dadurch gekennzeichnet, dass**
der effektive Strömungsquerschnitt der strömungsmäßigen Verbindung (92) zwischen der Auslassöffnung (32) und dem Einlass des Pulverabscheidersystems (46, 48, 56) variabel einstellbar ist.

2. Pulverbehälter (24) nach Anspruch 1,
wobei ferner eine Steuereinrichtung (100) vorgesehen ist, welche ausgebildet ist, in Abhängigkeit eines Betriebsmodus der Pulverbeschichtungsanlage (1) oder des Pulverbehälters (24) und vorzugsweise automatisch den effektiven Strömungsquerschnitt der strömungsmäßigen Verbindung (92) zwischen der Auslassöffnung (32) und dem Einlass des Pulverabscheidersystems (46, 48, 56) einzustellen.

3. Pulverbehälter (24) nach Anspruch 2,
wobei die Steuereinrichtung (100) ausgebildet ist, den effektiven Strömungsquerschnitt der strömungsmäßigen Verbindung (92) zwischen der Auslassöffnung (32) und dem Einlass des Pulverabscheidersystems (46, 48, 56) zu vergrößern, wenn der Betriebsmodus der Pulverbeschichtungsanlage (1) oder des Pulverbehälters (24) von einem Pulverbeschichtungsbetrieb zu einem Reinigungsbetrieb wechselt; und/oder
wobei die Steuereinrichtung (100) ausgebildet ist, den effektiven Strömungsquerschnitt der strömungsmäßigen Verbindung (92) zwischen der Auslassöffnung (32) und dem Einlass des Pulverabscheidersystems (46, 48, 56) zu reduzieren, wenn der Betriebsmodus der Pulverbeschichtungsanlage (1) oder des Pulverbehälters (24) von einem Reinigungsbetrieb zu einem Pulverbeschichtungsbetrieb wechselt.

4. Pulverbehälter (24) nach Anspruch 1,
wobei ferner eine Steuereinrichtung (100) vorgesehen ist, welche ausgebildet ist, in Abhängigkeit von einer pro Zeiteinheit dem Pulverbehälter (24) zugeführten Menge an Druckluft, insbesondere Fluidisierdruckluft und/oder Reinigungsdruckluft, und vorzugsweise automatisch den effektiven Strömungsquerschnitt der strömungsmäßigen Verbindung (92) zwischen der Auslassöffnung (32) und dem Einlass des Pulverabscheidersystems (46, 48, 56) einzustellen.

5. Pulverbehälter (24) nach Anspruch 4,
wobei die Steuereinrichtung (100) ausgebildet ist, den effektiven Strömungsquerschnitt der strömungsmäßigen Verbindung (92) zwischen der Auslassöffnung (32) und dem Einlass des Pulverabscheidersystems (46, 48, 56) zu vergrößern, wenn die pro Zeiteinheit dem Pulverbehälter (24) zugeführte Menge an Druckluft einen vorab festgelegten Wert überschreitet; und/oder
wobei die Steuereinrichtung (100) ausgebildet ist, den effektiven Strömungsquerschnitt der strömungsmäßigen Verbindung (92) zwischen der Auslassöffnung (32) und dem Einlass des Pulverabscheidersystems (46, 48, 56) zu reduzieren, wenn die pro Zeiteinheit dem Pulverbehälter (24) zugeführte Menge an Druckluft einen vorab festgelegten Wert unterschreitet.

6. Pulverbehälter (24) nach einem der Ansprüche 2 bis 5,
wobei ferner ein Drucksensorsystem (S5) vorgesehen ist zum Erfassen eines sich im Pulverbehälter (24) einstellenden Druckes.

7. Pulverbehälter (24) nach Anspruch 6,
wobei die Steuereinrichtung (100) ferner ausgebildet ist, in Abhängigkeit des erfassten Druckes den effektiven Strömungsquerschnitt der strömungsmäßigen Verbindung (92) zwischen der Auslassöffnung (32) und dem Einlass des Pulverabscheidersystems (46, 48, 56) vorzugsweise automatisch derart einzustellen, dass der erfasste Druckwert einen vorab festgelegten Druckwert nicht überschreitet, oder
wobei das Drucksensorsystem (S5) ferner ausgebildet ist, eine Differenz zwischen dem Druck im Pulverbehälter (24) und einem Druck am Einlass des Pulverabscheidersystems (46, 48, 56) zu ermitteln, und wobei die Steuereinrichtung (100) ausgebildet ist, in Abhängigkeit der ermittelten Druckdifferenz den effektiven Strömungsquerschnitt der strömungsmäßigen Verbindung (92) zwischen der Auslassöffnung (32) und dem Einlass des Pulverabscheidersystems (46, 48, 56) vorzugsweise automatisch derart einzustellen, dass die ermittelte Druckdifferenz einen vorab festgelegten Betrag nicht über- oder unterschreitet.

8. Pulverbehälter (24) nach einem der Ansprüche 1 bis 7,
wobei in der strömungsmäßigen Verbindung (92) zwischen der Auslassöffnung (32) und dem Einlass des Pulverabscheidersystems (46, 48, 56) eine ansteuerbare Einrichtung (91), insbesondere in Gestalt eines Ventilschiebers, eines Drosselventils oder eines variabel einstellbaren Quetschventils vorgesehen ist zum Reduzieren des effektiven Strömungsquerschnittes.

9. Pulverbehälter (24) nach einem der Ansprüche 1 bis 8,
wobei ferner eine ansteuerbare Weiche vorgesehen ist zum bedarfsweisen Ausbilden einer strömungsmäßigen Verbindung zwischen der Auslassöffnung (32) und der Außenatmosphäre,
wobei die Weiche vorzugsweise ein Y-Stück aufweist, welches einerseits über die in der Seitenwand des Pulverbehälters (24) vorgesehene Auslassöffnung (32) mit der Pulverkammer (22) strömungsmäßig verbunden oder verbindbar ist, und welches andererseits wahlweise mit der Außenatmosphäre oder dem Einlass des Pulverabscheidersystems (46, 48, 56) verbunden ist und oder
wobei die Weiche vorzugsweise mindestens eine Ventileinrichtung aufweist zum bedarfsweisen Trennen der strömungsmäßigen Verbindung zwischen der Pulverkammer (22) und der Außenatmosphäre bzw. dem Einlass des Pulverabscheidersystems (46, 48, 56), wobei die Ventileinrichtung mindestens ein vorzugsweise pneumatisch ansteuerbares Ventil, insbesondere Quetschventil, aufweist.

10. Pulverbehälter (24) nach einem der Ansprüche 1 bis 9,
welcher ferner eine Fluidisiereinrichtung (30) aufweist zum Einleiten von Fluidisierdruckluft in die Pulverkammer (22), wobei die Pulverkammer (22) mindestens einen Fluidisierdruckluftauslass mit einer Auslassöffnung aufweist zum Abführen der in die Pulverkammer (22) eingeleiteten Fluidisierdruckluft,
wobei die Auslassöffnung des Fluidisierdruckluftauslasses vorzugsweise identisch ist mit der in der einen Seitenwand des Pulverbehälters (24) vorgesehenen Auslassöffnung (32).

11. Pulverbehälter (24) nach Anspruch 10,
wobei der Fluidisierdruckluftauslass eine Entlüftungsleitung aufweist, welche außerhalb des Pulverbehälters (24) mit einem Steigrohr verbunden oder verbindbar ist zum Verhindern eines Pulveraustrags aus der Pulverkammer (22) im Pulverbeschichtungsbetrieb der Pulverbeschichtungsanlage (1),
wobei der mindestens eine Fluidisierdruckluftauslass vorzugsweise eine Entlüftungsleitung aufweist, welche einerseits mit der Auslassöffnung des Fluidisierdruckluftauslasses verbunden oder verbindbar ist und andererseits in einen Absaugtrichter einer vorzugsweise als Luftmengenverstärker ausgebildeten Absauganlage mündet.

12. Pulverbehälter (24) nach einem der Ansprüche 1 bis 11,
wobei vorzugsweise in einer die Pulverkammer (22) begrenzenden oberen Seitenwand eine mit einem Deckel (23) verschließbare Öffnung vorgesehen ist.

13. Pulverbehälter (24) nach einem der Ansprüche 1 bis 12,
wobei das Pulverabscheidersystem (46, 48, 56) mindestens eine Nachfiltervorrichtung (56) aufweist zum Abtrennen von Pulver aus einem der Nachfiltervorrichtung (56) zugeführten Luft-Pulver-Gemisch.
wobei das Pulverabscheidersystem (46, 48, 56) vorzugsweise mindestens einen Zyklonabscheider (48) aufweist zum Grobabscheiden von Pulver aus einem dem Zyklonabscheider (48) zugeführten Luft-Pulver-Gemisch, wobei vorzugsweise der Auslass des mindestens einen Zyklonabscheiders (48) mit dem Einlass der mindestens einen Nachfiltervorrichtung (56) strömungsmäßig verbunden oder verbindbar ist.

14. Pulverbehälter (24) nach einem der Ansprüche 1 bis 13,
wobei die Pulverkammer (22) ein Volumen von mindesten 30 bis 150 Liter und vorzugsweise von mindestens 60 bis 100 Liter aufweist; und/oder wobei in der Bodenwand des Pulverbehälters (24) mindestens ein Pulverauslass vorgesehen ist, welcher vorzugsweise mit Hilfe eines Quetschventils geöffnet werden kann, um bedarfsweise Beschichtungspulver (42) vorzugsweise durch Schwerkraft aus der Pulverkammer (22) zu entfernen; und oder
wobei ferner mindestens eine Pulverabgabeeinrichtung vorgesehen ist, welche über eine Pulverauslassöffnung (36) mit der Pulverkammer (22) verbunden oder verbindbar ist zum Absaugen von Beschichtungspulver (42) aus der Pulverkammer (22) im Pulverbeschichtungsbetrieb der Pulverbeschichtungsanlage (1), wobei die mindestens eine Pulverabgabeeinrichtung einen Injektor oder eine Pulverpumpe (4) aufweist, welcher bzw. welche mit einem über die Pulverauslassöffnung (36) in der Pulverkammer (22) mündenden Pulverabgabekanal verbunden ist, wobei die Pulverauslassöffnung (36) vorzugsweise eine elliptische Form aufweist, und wobei der Injektor bzw. die Pulverpumpe (4) der mindestens einen Pulverabgabeeinrichtung relativ zu der Pulverkammer (22) an einer Stelle angeordnet ist, welche höher als das höchste in der Pulverkammer (22) einstellbare Pulverniveau liegt, und wobei der Pulverabgabekanal vorzugsweise innerhalb einer Seitenwand der Pulverkammer (22) ausgebildet ist.

15. Pulverbeschichtungsanlage (1) zum Sprühbeschichten von Gegenständen (2) mit Beschichtungspulver (42), wobei die Pulverbeschichtungsanlage (1) folgendes aufweist:
- mindestens einen Pulverbehälter (24) nach einem der Ansprüche 1 bis 14;
- mindestens einen Sprühbeschichtungsplatz oder eine Sprühbeschichtungskabine (43) zum Sprühbeschichten von Gegenständen (2); und
- mindestens ein Pulverabscheidersystem (46, 48, 56),
wobei der mindestens eine Sprühbeschichtungsplatz bzw. die mindestens eine Sprühbeschichtungskabine (43) mit einer Pulverabsaugung versehen ist, über welche überschüssiges Pulver dem Pulverabscheidersystem (46, 48, 56) zuführbar ist.

## Claims

1. A powder container (24) for supplying coating powder to a powder coating system (1), wherein the powder container (24) comprises a powder chamber (22) for coating powder (42) delimited by side walls, wherein an outlet opening (32) is provided in a side wall of the powder container (24) via which the powder chamber (22) is fluidly connected or connectable to an inlet of a powder separation system (46, 48, 56),
**characterized in that**
the effective flow cross section of the fluidic connection (92) between the outlet opening (32) and the inlet of the powder separation system (46, 48, 56) is variably adjustable.

2. The powder container (24) according to claim 1,
wherein a control device (100) is further provided which is designed to regulate, and preferably automatically, the effective flow cross section of the fluidic connection (92) between the outlet opening (32) and the inlet of the powder separation system (46, 48, 56) as a function of an operating mode of the powder coating system (1) or the powder container (24).

3. The powder container (24) according to claim 2,
wherein the control device (100) is designed to increase the effective flow cross section of the fluidic connection (92) between the outlet opening (32) and the inlet of the powder separation system (46, 48, 56) when the operating mode of the powder coating system (1) or powder container (24) changes from a powder-coating mode to a cleaning mode; and/or
wherein the control device (100) is designed to reduce the effective flow cross section of the fluidic connection (92) between the outlet opening (32) and the inlet of the powder separation system (46, 48, 56) when the operating mode of the powder coating system (1) or powder container (24) changes from a cleaning mode to a powder-coating mode.

4. The powder container (24) according to claim 1,
wherein a control device (100) is further provided which is designed to regulate, and preferably automatically, the effective flow cross section of the fluidic connection (92) between the outlet opening (32) and the inlet of the powder separation system (46, 48, 56) as a function of the amount of compressed air, in particular fluidizing compressed air and/or cleaning compressed air, supplied to the powder container (24) per unit of time.

5. The powder container (24) according to claim 4,
wherein the control device (100) is designed to increase the effective flow cross section of the fluidic connection (92) between the outlet opening (32) and the inlet of the powder separation system (46, 48, 56) when the amount of compressed air supplied to the powder container (24) per unit of time exceeds a predetermined value; and/or
wherein the control device (100) is designed to reduce the effective flow cross section of the fluidic connection (92) between the outlet opening (32) and the inlet of the powder separation system (46, 48, 56) when the amount of compressed air supplied to the powder container (24) per unit of time falls below a predetermined value.

6. The powder container (24) according to one of claims 2 to 5,
wherein a pressure sensor system (S5) is further provided for measuring a resultant pressure in the powder container (24).

7. The powder container (24) according to claim 6,
wherein the control device (100) is further designed to preferably automatically regulate the effective flow cross section of the fluidic connection (92) between the outlet opening (32) and the inlet of the powder separation system (46, 48, 56) as a function of the detected pressure such that the detected pressure value does not exceed a predetermined pressure value, or
wherein the pressure sensor system (S5) is further designed to determine a difference between the pressure in the powder container (24) and a pressure at the inlet of the powder separation system (46, 48, 56), and wherein the control device (100) is designed to preferably automatically regulate the effective flow cross section of the fluidic connection (92) between the outlet opening (32) and the inlet of the powder separation system (46, 48, 56) as a function of the determined pressure difference such that the determined pressure difference does not exceed or fall short of a predetermined value.

8. The powder container (24) according to one of claims 1 to 7,
wherein a controllable mechanism (91), in particular in the form of a slide valve, a butterfly valve or a variably adjustable pinch valve, is provided in the fluidic connection (92) between the outlet opening (32) and the inlet of the powder separation system (46, 48, 56) for reducing the effective cross section.

9. The powder container (24) according to one of claims 1 to 8,
wherein a controllable gate is further provided to form a fluidic connection between the outlet opening (32) and the external atmosphere as needed, wherein the gate preferably comprises a Y-piece which is fluidly connected or connectable on one side to the powder chamber (22) via the outlet opening (32) provided in the side wall of the powder container (24), and which is selectively connected on the other side to the external atmosphere or to the inlet of the powder separation system (46, 48, 56), and/or
wherein the gate preferably comprises at least one valve mechanism for disconnecting the fluidic connection between the powder chamber (22) and the external atmosphere or the inlet of the powder separation system (46, 48, 56) respectively as needed, wherein the valve mechanism comprises at least one preferably pneumatically controllable valve, in particular pinch valve.

10. The powder container (24) according to one of claims 1 to 9,
which further comprises a fluidizing device (30) for introducing fluidizing compressed air into the powder chamber (22), wherein the powder chamber (24) comprises at least one fluidizing compressed air outlet having an outlet opening for discharging the fluidizing compressed air introduced into the powder chamber (22), wherein the outlet opening of the fluidizing compressed air outlet is preferably identical to the outlet opening (32) provided in the side wall of the powder container (24).

11. The powder container (24) according to claim 10,
wherein the fluidizing compressed air outlet comprises a vent line which is connected or connectable to a riser tube external of the powder container (24) to prevent discharge of powder from the powder chamber (22) during the powder-coating mode of the powder coating system (1),
wherein the at least one fluidizing compressed air outlet preferably comprises a vent line which is connected or connectable on one side to the outlet opening of the fluidizing compressed air outlet and empties on the other side into a suction funnel of an exhaust system preferably designed as an air amplifier.

12. The powder container (24) according to one of claims 1 to 11,
wherein an opening able to be closed by a cover (23) is preferably provided in an upper side wall delimiting the powder chamber (22).

13. The powder container (24) according to one of claims 1 to 12,
wherein the powder separation system (46, 48, 56) comprises at least one afterfilter device (56) for separating powder from an air/powder mixture supplied to the afterfilter device (56),
wherein the powder separation system (46, 48, 56) preferably comprises at least one cyclone separator (48) for the coarse separation of powder from an air/powder mixture supplied to the cyclone separator (48), wherein the outlet of the at least one cyclone separator (48) is preferably fluidly connected or connectable to the inlet of the at least one afterfilter device (56).

14. The powder container (24) according to one of claims 1 to 13,
wherein the powder chamber (22) has a volume of at least 30 to 150 liters, and preferably of at east 60 to 100 liters; and/or
wherein at least one powder outlet is provided in the bottom wall of the powder container (24) which can preferably be opened by means of a pinch value in order to remove coating powder (42) from the powder chamber (22) as needed, preferably by the force of gravity; and/or
wherein at least one powder-dispensing device is further provided which is connected or connectable to the powder chamber (22) via a powder outlet opening (36) for suctioning coating powder (42) out of the powder chamber (22) in the powder-coating mode of the powder coating system (1), wherein the at least one powder-dispensing device comprises an injector or a powder pump (4) connected to a powder discharge channel emptying into the powder chamber (22) via the powder outlet opening (36), wherein the powder outlet opening (36) preferably has an elliptical shape, and wherein the injector or powder pump (4) respectively of the at least one powder-dispensing device is arranged at a higher position relative to the powder chamber (22) than the highest powder level able to be set in the powder chamber (22), and wherein the powder discharge channel is preferably formed within a side wall of the powder chamber (22).

15. A powder coating system (1) for the spray coating of objects (2) with coating powder (42), wherein the powder coating system (1) comprises the following:
- at least one powder container (24) according to one of claims 1 to 14;
- at least one spray-coating station or spray-coating booth (43) for spray coating objects (2); and
- at least one powder separation system (46, 48, 56),
wherein the at least one spray-coating station or the at least one spray-coating booth (43) respectively is provided with a powder suction system by which excess powder can be fed to the powder separation system (46, 48, 56).

## Revendications

1. Récipient à poudre (24) pour l'alimentation en poudre de revêtement d'une installation de revêtement de poudre (1), le récipient à poudre (24) présentant une chambre à poudre (22) pour la poudre de revêtement (42), qui est délimitée par des parois latérales, une ouverture de sortie (32) étant prévue dans une paroi latérale du récipient à poudre (24), par laquelle la chambre à poudre (22) est reliée ou susceptible d'être reliée en termes d'écoulement à une entrée d'un système séparateur de poudre (46, 48, 56),
**caractérisé en ce que**
la section transversale d'écoulement effective de la liaison d'écoulement (92) entre l'ouverture de sortie (32) et l'entrée du système séparateur de poudre (46, 48, 56) est réglable de façon variable.

2. Récipient à poudre (24) selon la revendication 1,
dans lequel
il est en outre prévu un moyen de commande (100) qui est réalisé pour régler la section transversale d'écoulement effective de la liaison d'écoulement (92) entre l'ouverture de sortie (32) et l'entrée du système séparateur de poudre (46, 48, 56) en fonction d'un mode de fonctionnement de l'installation de revêtement de poudre (1) ou du récipient à poudre (24) et de préférence automatiquement.

3. Récipient à poudre (24) selon la revendication 2,
dans lequel
le moyen de commande (100) est réalisé pour augmenter la section transversale d'écoulement effective de la liaison d'écoulement (92) entre l'ouverture de sortie (32) et l'entrée du système séparateur de poudre (46, 48, 56) lorsque le mode de fonctionnement de l'installation de revêtement de poudre (1) ou du récipient à poudre (24) change pour passer d'un fonctionnement de revêtement de poudre vers un fonctionnement de nettoyage ; et/ou
le moyen de commande (100) est réalisé pour réduire la section transversale d'écoulement effective de la liaison d'écoulement (92) entre l'ouverture de sortie (32) et l'entrée du système séparateur de poudre (46, 48, 56) lorsque le mode de fonctionnement de l'installation de revêtement de poudre (1) ou du récipient à poudre (24) change pour passer d'un fonctionnement de nettoyage vers un fonctionnement de revêtement de poudre.

4. Récipient à poudre (24) selon la revendication 1,
dans lequel
il est en outre prévu un dispositif de commande (100) qui est réalisé pour régler la section transversale d'écoulement effective de la liaison d'écoulement (92) entre l'ouverture de sortie (32) et l'entrée du système séparateur de poudre (46, 48, 56) en fonction d'une quantité d'air comprimé, en particulier d'air comprimé de fluidisation et/ou d'air comprimé de nettoyage, amenée au récipient à poudre (24) par unité de temps, et de préférence automatiquement.

5. Récipient à poudre (24) selon la revendication 4,
dans lequel
le moyen de commande (100) est réalisé pour augmenter la section transversale d'écoulement effective de la liaison d'écoulement (92) entre l'ouverture de sortie (32) et l'entrée du système séparateur de poudre (46, 48, 56) lorsque la quantité d'air comprimé amenée au récipient à poudre (24) par unité de temps dépasse une valeur fixée préalablement ;
et/ou
le moyen de commande (100) est réalisé pour réduire la section transversale d'écoulement effective de la liaison d'écoulement (92) entre l'ouverture de sortie (32) et l'entrée du système séparateur de poudre (46, 48, 56) lorsque la quantité d'air comprimé amenée au récipient à poudre (24) par unité de temps passe au-dessous d'une valeur fixée préalablement.

6. Récipient à poudre (24) selon l'une des revendications 2 à 5,
dans lequel
il est en outre prévu un système capteur de pression (S5) pour détecter une pression qui s'établit dans le récipient à poudre (24).

7. Récipient à poudre (24) selon la revendication 6,
dans lequel
le moyen de commande (100) est en outre réalisé pour régler de préférence automatiquement la section transversale d'écoulement effective de la liaison d'écoulement (92) entre l'ouverture de sortie (32) et l'entrée du système séparateur de poudre (46, 48, 56) en fonction de la pression détectée, de telle sorte que la valeur de pression détectée ne dépasse pas une valeur de pression fixée préalablement, ou
le système capteur de pression (S5) est en outre réalisé pour déterminer une différence entre la pression dans le récipient à poudre (24) et une pression à l'entrée du système séparateur de poudre (46, 48, 56), et
le moyen de commande (100) est réalisé pour régler de préférence automatiquement la section transversale d'écoulement effective de la liaison d'écoulement (92) entre l'ouverture de sortie (32) et l'entrée du système séparateur de poudre (46, 48, 56) en fonction de la différence de pression déterminée, de telle sorte que la différence de pression déterminée ne passe pas au-dessus ou au-dessous d'un montant fixé préalablement.

8. Récipient à poudre (24) selon l'une des revendications 1 à 7,
dans lequel
dans la liaison d'écoulement (92) entre l'ouverture de sortie (32) et l'entrée du système séparateur de poudre (46, 48, 56), il est prévu un moyen pilotable (91) en particulier sous la forme d'un tiroir de vanne, d'une vanne d'étranglement ou d'une vanne à écrasement réglable de façon variable, en vue de réduire la section transversale d'écoulement effective.

9. Récipient à poudre (24) selon l'une des revendications 1 à 8,
dans lequel
il est en outre prévu un séparateur pilotable pour réaliser selon les besoins une liaison d'écoulement entre l'ouverture de sortie (32) et l'atmosphère extérieure,
le séparateur comprend de préférence un élément en Y qui est relié ou susceptible d'être relié en termes d'écoulement d'une part à la chambre à poudre (22) par l'ouverture de sortie prévue dans la paroi latérale du récipient à poudre (24), et qui est relié d'autre part au choix à l'atmosphère extérieure ou à l'entrée du système séparateur de poudre (46, 48, 56), ou
le séparateur comprend de préférence au moins un moyen formant vanne pour la séparation selon les besoins de la liaison d'écoulement entre la chambre à poudre (22) et l'atmosphère extérieure ou l'entrée du système séparateur de poudre (46, 48, 56), le moyen formant vanne comprenant au moins une vanne pilotable de préférence par voie pneumatique, en particulier une vanne à écrasement.

10. Récipient à poudre (24) selon l'une des revendications 1 à 9,
comprenant en outre un moyen de fluidisation (30) pour introduire de l'air comprimé de fluidisation dans la chambre à poudre (22), la chambre à poudre (22) comprenant au moins une sortie d'air comprimé de fluidisation ayant une ouverture de sortie pour évacuer l'air comprimé de fluidisation introduit dans la chambre à poudre (22),
l'ouverture de sortie de la sortie d'air comprimé de fluidisation étant de préférence identique à l'ouverture de sortie (32) prévue dans ladite paroi latérale du récipient à poudre (24).

11. Récipient à poudre (24) selon la revendication 10,
dans lequel
la sortie d'air comprimé de fluidisation comprend une conduite de purge qui est reliée ou susceptible d'être reliée à un tube montant à l'extérieur du récipient à poudre (24) pour empêcher une extraction de poudre hors de la chambre à poudre (22) pendant le fonctionnement de revêtement de poudre de l'installation de revêtement de poudre (1),
et
ladite au moins une sortie d'air comprimé de fluidisation comprend de préférence une conduite de purge qui est reliée ou susceptible d'être reliée d'une part à l'ouverture de sortie de la sortie d'air comprimé de fluidisation et qui débouche d'autre part dans un entonnoir d'aspiration d'une installation d'aspiration réalisée de préférence sous forme d'amplificateur de débit d'air.

12. Récipient à poudre (24) selon l'une des revendications 1 à 11,
dans lequel
il est prévu de préférence une ouverture dans une paroi latérale supérieure délimitant la chambre à poudre (22), qui est refermable par un couvercle (23).

13. Récipient à poudre (24) selon l'une des revendications 1 à 12,
dans lequel
le système séparateur de poudre (46, 48, 56) comprend au moins un dispositif de post-filtrage (56) pour séparer la poudre hors d'un mélange air-poudre amené audit dispositif de post-filtrage (56),
et
le système séparateur de poudre (46, 48, 56) comprend de préférence au moins un séparateur cyclone (48) pour la séparation grossière de poudre hors d'un mélange air-poudre amené audit séparateur cyclone (48),
et
de préférence, la sortie dudit au moins un séparateur cyclone (48) est reliée ou susceptible d'être reliée en termes d'écoulement à l'entrée dudit au moins un dispositif de post-filtrage (56).

14. Récipient à poudre (24) selon l'une des revendications 1 à 13,
dans lequel
la chambre à poudre (22) présente un volume d'au moins 30 à 150 litres et de préférence d'au moins 60 à 100 litres ; et/ou
au moins une sortie de poudre est prévue dans la paroi de fond du récipient à poudre (24), qui peut être ouverte de préférence à l'aide d'une vanne à écrasement pour enlever en cas de besoin de la poudre de revêtement (42) de préférence par gravité hors de la chambre à poudre (22) ;
et/ou
il est en outre prévu au moins un moyen de distribution de poudre qui est relié ou susceptible d'être relié à la chambre à poudre (22) via une ouverture de sortie de poudre (36) pour aspirer de la poudre de revêtement (42) hors de la chambre à poudre (22) en fonctionnement de revêtement de poudre de l'installation de revêtement de poudre (1),
ledit au moins un moyen de distribution de poudre comprend un injecteur ou une pompe à poudre (4) qui est relié(e) à un canal de distribution de poudre débouchant dans la chambre à poudre (22) via l'ouverture de sortie de poudre (36),
l'ouverture de sortie de poudre (36) présente de préférence une forme elliptique, et
l'injecteur ou la pompe à poudre (4) dudit au moins un moyen de distribution de poudre est agencé(e) à un emplacement par rapport à la chambre à poudre (22) qui est plus haut que le niveau de poudre le plus haut réglable dans la chambre à poudre (22), et
le canal de distribution de poudre est réalisé de préférence à l'intérieur d'une paroi latérale de la chambre à poudre (22).

15. Installation de revêtement de poudre (1) pour le revêtement par pulvérisation d'objets (2) avec une poudre de revêtement (42), l'installation de revêtement de poudre (1) comprenant :
- au moins un récipient à poudre (24) selon l'une des revendications 1 à 14;
- au moins un poste de revêtement par pulvérisation ou une cabine de revêtement par pulvérisation (43) pour le revêtement par pulvérisation d'objets (2) ; et
- au moins un système séparateur de poudre (46, 48, 56),
dans laquelle
ledit au moins un poste de revêtement par pulvérisation ou ladite au moins une cabine de revêtement par pulvérisation (43) est pourvu(e) d'un moyen d'aspiration de poudre par laquelle de la poudre excédentaire peut être amenée au système séparateur de poudre (46, 48, 56).
